# EUROPÄISCHE PATENTANMELDUNG

(11) **EP 1 724 139 A2**
(43) Veröffentlichungstag der Anmeldung: **22.11.2006**
(21) Anmeldenummer: 06007787.2
(22) Anmeldetag: 13.04.2006
(51) Int. Cl.: B60J 7/057

(54) **Detektionsvorrichtung zur Überwachung von Grenzflächen eines Raumes eines Kraftfahrzeuges**

(30) Priorität: 18.05.2005 DE 102005022717
(71) Anmelder: Wilhelm Karmann GmbH, 49084 Osnabrück (DE)
(72) Erfinder: Jahn, Jorg, 32257 Bünde (DE); Gutendorf, Peter, 49088 Osnabrück (DE)

(57) **Zusammenfassung**

Die Erfindung betrifft eine Detektionsvorrichtung zur Überwachung von Grenzflächen eines Raumes eines Kraftfahrzeuges, insbesondere eines Bewegungsraumes eines Verdecks (2) eines Cabriolet-Kraftfahrzeuges (1), mittels Ultraschallwellen, mit wenigstens einer Sende-/Empfangseinheit (4, 5, 6, 7, 8) für Ultraschallwellen und einer hiermit verbundenen Auswerteeinheit. Dabei ist vorgesehen, dass der Detektionsbereich der Sende-/Empfangseinheit (4, 5, 6, 7, 8) ein wenigstens annähernd parallel zu einer Grenzfläche verlaufendes, im Wesentlichen ebenenartiges Ultraschallfeld (10, 11, 12, 13, 14) ist, wobei die Auswerteeinheit eine ermittelte Echohüllkurve mit einer Vergleichskurve vergleicht und bei einer vordefinierten Abweichung einen Eingriff in den Detektionsbereich erkennt.

## Beschreibung

Die Erfindung betrifft eine Detektionsvorrichtung zur Überwachung von Grenzflächen eines Raumes eines Kraftfahrzeuges, insbesondere eines Bewegungsraumes eines Verdecks eines Cabriolet-Kraftfahrzeuges, mittels Ultraschallwellen nach der im Oberbegriff des Anspruches 1 näher definierten Art.

Aus der DE 102 48 762 ist eine Detektionseinrichtung zur Erkennung eines Eingriffs in einen Bewegungsraum eines Verdeckmechanismus bekannt, welche eine Sensorik mit nach unterschiedlichen Messprinzipien messenden Sensoren aufweist. Dabei wird die Verwendung einer optischen Sensorik mit einer optischen Lichtsende- und Empfangseinrichtung vorgeschlagen, welche um den Bewegungsraum des Verdecks wenigstens eine Lichtebene bildet und einen Eingriff in die Lichtebene durch Reflexionserkennungsmittel detektiert. Die Lichtquelle der Lichtsende- und Empfangseinrichtung kann dabei ein Laser sein, jedoch kann die von einer Licht- bzw. Strahlungsquelle ausgehende Strahlung auch eine Infrarotstrahlung, eine Ultraviolettstrahlung, eine Röntgenstrahlung oder eine Mikrowellenstrahlung sein. Des Weiteren wird die Verwendung eines Bildsensors, insbesondere einer Kamera; zur Überwachung des Bewegungsraumes des Verdeckmechanismus vorgeschlagen.

Aus der DE 198 11 232 A1 ist ein Kraftfahrzeug mit einem verfahrbaren Verdeck bekannt, wobei in dem Kraftfahzeug oberhalb seiner Fahrzeuginsassen Sensoren zum Stillsetzen des Antriebs des Verdecks angebracht sind, falls Fahrzeuginsassen einen Sicherheitsbereich unterhalb des Verdecks nicht einhalten. Der Sensor kann dabei so ausgebildet sein, dass er unterhalb des Verdecks eine großflächige Schranke bildet, bei deren Überschreiten, beispielsweise mit der Hand, eine Verdecksteuerung anspricht und den Antrieb des Verdecks stillsetzt.

In weiterer Ausgestaltung des Sensors wird vorgeschlagen, diesen als eine Kamera, einen Infrarotsensor und/oder einen Ultraschallsensor auszugestalten.

Wenngleich diese bekannten Detektionsvorrichtungen geeignet sind, einen ausreichenden Einklemmschutz bei einer Verdeckbewegung zu gewährleisten, so ist ein vergleichsweise großer Aufwand zur Vermeidung von Fehlauslösungen nötig. Problematisch ist dabei insbesondere, dass die meisten bekannten Sensoren zur berührungslosen Erfassung eines Eingriffs in einen Überwachungsbereich einen kegelförmig von einer Sende- bzw. Strahlungseinrichtung ausgehenden Überwachungsbereich bilden, welcher einerseits zu Lücken in der Überwachung NAHE DER Sende- bzw. Strahlungseinheit führen kann und andererseits mit zunehmendem Abstand von der Sende- bzw. Strahlungseinheit aufgrund der zunehmenden Größe des Kegeldurchmessers zu einer vergleichsweise hohen Fehlauslösequote führt.

Letztere Nachteile sind auch der Grund dafür, dass bei bestimmten Grenzflächen eines Raumes eines Kraftfahrzeuges, wie der Grenzfläche zwischen einem Verdeckablageraum und einem Restkofferraum in einem von einer Heckklappe abgedeckten Aufnahmeraum eines Cabriolet-Kraftfahrzeuges, mechanische Begrenzungsmittel gewählt werden, um einen Eingriff in einen bestimmten Raum des Kraftfahrzeuges, wie den Verdeckablageraum, sicher auszuschließen.

Ein Beispiel für eine solche Trennung zwischen zwei Räumen bei einem Kraftfahrzeug ist in der deutschen Patentschrift DE 44 45 920 C2 beschrieben, wobei zur Trennung zwischen einem Verdeckablageraum und einem Restkofferraumbereich eine Zwischenwand in Form eines in jeweiligen seitlichen Führungsprofilen abgestützten Rollo, eines Faltenvorhangs oder dergleichen ausgeführt ist.

Derartige bauliche Maßnahmen zur Gewährleistung eines Nichteingriffs in einen Raum eines Kraftfahrzeuges bedingen sowohl einen erheblichen konstruktiven Aufwand als auch hohe Kosten.

Es ist daher Aufgabe der vorliegenden Erfindung, eine Detektionsvorrichtung zur Überwachung von Grenzflächen eines Raumes eines Kraftfahrzeuges nach der eingangs genannten Art derart weiter zu bilden, dass auch eine mit herkömmlichen Sensoren schwierig zu überwachende Grenzfläche eines Raumes zuverlässig überwacht und ein Eingriff mit hoher Zuverlässigkeit erkannt werden kann.

Erfindungsgemäß wird diese Aufgabe mit einer Detektionsvorrichtung nach den Merkmalen des Anspruches 1 gelöst.

Eine Detektionsvorrichtung zur Überwachung von Grenzflächen eines Raumes eines Kraftfahrzeuges mittels Ultraschallwellen, welche mit wenigstens einer Sende-/Empfangseinheit für Ultraschallwellen und einer hiermit verbundenen Auswerteeinheit ausgestaltet ist, und bei der erfindungsgemäß der Detektionsbereich der Sende-/Empfangseinheit ein wenigstens annähernd parallel zu einer Grenzfläche verlaufendes, im Wesentlichen ebenenartiges Ultraschallfeld ist, wobei die Auswerteeinheit eine ermittelte Echohüllkurve mit einer Vergleichskurve vergleicht und bei einer vordefinierten Abweichung einen Eingriff in den Detektionsbereich erkennt, ermöglicht mit flächigen Überwachungsebenen eine lückenlose Überwachung von Grenzflächen auch in schwierig zu überwachenden Bereichen des Kraftfahrzeuges.

Unter einem im Wesentlichen ebenenartigen Ultraschallfeld ist vorliegend ein Ultraschallfeld zu verstehen, dessen Tiefe im Vergleich zu der Breite bzw. Höhe der zu überwachenden Grenzfläche um ein Mehrfaches geringer bzw. zu vernachlässigen ist, wobei die Tiefe vorzugsweise so gering ist, dass von flächenartigen Ultraschallwellenbündeln eine Ebene aufgespannt wird.

Bei einer vorteilhaften Ausführung der Erfindung ist die wenigstens eine Sende-/Empfangseinheit der Detektionsvorrichtung bei einem Cabriolet-Kraftfahrzeug in einem von einer Heckklappe abgedeckten Aufnahmeraum, welcher in abgelegtem Zustand des Verdecks teilweise einen Verdeckablageraum und teilweise einen Kofferraum bildet, derart angeordnet, dass sich das Ultraschallfeld entlang der Grenzfläche zwischen diesen Räumen erstreckt.

Die erfindungsgemäße Detektionsvorrichtung ist dabei geeignet, eine bei bekannten Lösungen anzutreffende Zwischenwand zwischen dem Ablageraum für eine versenkbare Dachkonstruktion und einem Restkofferraum zu ersetzen, womit anstelle einer aufwändigen mechanischen Lösung eine kostengünstige Ausgestaltung mit wenigen elektronischen Komponenten zum Betrieb der erfindungsgemäßen akustischen Detektionsvorrichtung tritt.

Bei einer Anordnung in einem von einer Heckklappe abgedeckten Aufnahmeraum des Kraftfahrzeuges kann die wenigstens eine Sende-/Empfangseinheit an einer Begrenzungswand des Aufnahmeraumes derart angeordnet sein, dass sich das Ultraschallfeld wenigstens annähernd horizontal erstreckt und den Aufnahmeraum wenigstens teilweise vertikal in den Verdeckablageraum und den darunter angeordneten Kofferraum unterteilt.

Wenn die wenigstens eine Sende-/Empfangseinheit an einer an den Fahrzeuginnenraum angrenzenden so genannten Fondrückwand angeordnet ist, kann auf einfache Weise der gesamte heckseitige Aufnahmeraum mit einem horizontalen Ultraschallfeld vertikal unterteilt werden.

Abweichend hiervon kann jedoch auch nur ein Teil des heckseitigen Aufnahmeraumes mittels des Ultraschallfeldes unterteilt werden, wobei beispielsweise vorgesehen sein kann, dass in Fahrzeuglängsrichtung nur ein an die Fondrückwand angrenzender Bereich über wenigstens eine Sende-/Empfangseinheit überwacht wird, welche hierzu an einer parallel zur Fahrzeugseite verlaufenden Begrenzungswand des heckseitigen Aufnahmeraumes angeordnet sein kann.

Unabhängig von der je nach Anwendungsfall zu variierenden Anordnung in dem heckseitigen Aufnahmeraum wird durch die erfindungsgemäße Detektionsvorrichtung sichergestellt, dass keine Gegenstände in den Teil des heckseitigen Aufnahmeraumes ragen, welcher als Verdeckablageraum vorgesehen ist. Ein Blockieren der Verdeckbewegung oder eine Beschädigung des Verdecks durch in dem Restkofferraum befindliche Gegenstände wird auf diese Weise sicher vermieden.

In einer weiteren Ausgestaltung der erfindungsgemäßen Detektionsvorrichtung kann die wenigstens eine Sende-/Empfangseinheit an einer Fahrzeugseite wenigstens annähernd in Höhe einer Türbrüstung derart angeordnet sein, dass sich das Ultraschallfeld entlang einer Grenzfläche eines Insassenund/oder Verdeckbewegungsraumes erstreckt.

Damit kann zum Beispiel bei einem Cabriolet ein Eingriff in einen Bewegungsraum eines Verdeckmechanismus sicher und möglichst frühzeitig erkannt werden, so dass eine automatische Verdeckbewegung ohne eine Verletzung von menschlichen Körperteilen oder eine Beschädigung von Bauteilen erfolgen kann.

Das Ultraschallfeld kann sich als Ebene vertikal zu einem Fahrzeugboden erstrecken oder auch horizontal verlaufen, d. h. im Wesentlichen parallel zu dem Fahrzeugboden. Die Sende-/Empfangseinheit kann dabei zum Aufspannen einer vertikalen oder horizontalen Überwachungsebene seitlich des Fahrzeugs sowohl an einem seitlichen Rückspiegel als auch an einer Türbrüstung angeordnet sein.

Die erfindungsgemäße Detektionsvorrichtung eignet sich dabei auch als Teil eines Alarmsystems. Ein sich vertikal von einer seitlichen Türbrüstung aus erstreckendes Ultraschallfeld und/oder ein sich horizontal zwischen den seitlichen Türbrüstungen erstreckendes Ultraschallfeld kann bei geöffnetem Verdeck eines Cabriolet-Kraftfahrzeuges zu einem frühen und sicheren Erkennen eines unbefugtes Eindringens in den Fahrzeuginnenraum führen.

Eine solche seitliche vertikale oder horizontale Ausstrahlung von flächigen bzw. flächenartigen Ultraschallbündeln kann sowohl bei einem Cabriolet-Kraftfahrzeug als auch bei einem geschlossenen Kraftfahrzeug Anwendung finden.

Besonders vorteilhaft im Hinblick auf den Schutz eines Kopfbereiches von Insassen als auch auf eine frühzeitige Erkennung eines unbefugten Eindringens in den Fahrzeuginnenraum ist es, wenn die wenigstens eine Sende-/Empfangseinheit wenigstens annähernd in Höhe einer oberen Traverse eines Windschutzscheibenrahmens derart angeordnet ist, dass sich das Ultraschallfeld im Wesentlichen parallel zu einem Fahrzeugboden entlang der oberen Grenzfläche des Insassen-/Verdeckbewegungsraumes erstreckt.

Wenn zum Beispiel ein Eindringling über geschlossene seitliche Fahrzeugscheiben bei geöffnetem Verdeck greift, wird bei einer solch hohen Ausbildung eines Ultraschallfeldes eine Störung des Ultraschallfeldes bereits frühzeitig detektiert, bevor der Eindringling zu den Fahrzeugsitzen und evtl. hierauf befindlichen, zu entwendenden Gegenständen gelangen kann.

In einer Weiterführung der Erfindung kann vorgesehen sein, dass eine solche in Höhe eines Windschutzscheibenrahmens im Wesentlichen horizontal verlaufende Überwachungsebene nur aktiv ist, wenn das Verdeck geöffnet ist. Bei geschlossenem Verdeck sind wie bei einem Kraftfahrzeug, das nicht in Cabrioletbauart ausgeführt ist, Überwachungsebenen in Höhe der Türbrüstung bzw. ausgehend von der Türbrüstung ausreichend.

Bei einem Cabriolet-Kraftfahrzeug kann die wenigstens eine Sende-/Empfangseinheit der erfindungsgemäßen Detektionsvorrichtung auch direkt in das sich bewegende Verdeck selbst integriert sein oder auch mit weiteren Sensoren im hinteren Fahrzeugbereich kombiniert werden, die mit senkrecht ausgerichtetem Überwachungsbereich die sich bewegenden Gestängeteile überwachen.

Die Auswerteeinheit der erfindungsgemäßen Detektionsvorrichtung ist vorzugsweise dahingehend ausgelegt, aus einem zeitlichen Verlauf der nach jedem abgestrahlten Ultraschallwellenimpuls empfangenen Ultraschallwellen eine Echohüllkurve zu bilden und deren Fläche durch Integration zu berechnen, wobei der Wert dieser Fläche mit dem Flächenwert einer Vergleichskurve verglichen wird, welche für ein Ultraschallfeld ohne Eingriff eines Objektes oder Menschen vordefiniert ist.

Ebenso kann ein Vergleichen hinsichtlich einer Amplituden-Ansprechschwelle für die Echohüllkurve vorgenommen werden.

Die Sende-/Empfangseinheit kann beispielsweise einen geeignet ausgestalteten Ultraschallwandler aufweisen, der von einer zugehörigen Wandleransteuereinheit als Sender oder als Empfänger angesteuert wird. Solch eine Wandleransteuereinheit kann auf an sich bekannte Weise als Ein-Chip-Bauelement ausgeführt sein. Des weiteren kann eine Senderansteuerung mit einem MOSFET-Schalter vorgesehen sein, der im Sendebetrieb leitend angesteuert wird und das Ausgangssignal eines Impulsoszillators zur Wandlereinheit durchlässt. Diese kann entsprechende Ultraschallimpulse in Form von Ultraschallwellen aussenden, welche ein ebenenartiges Ultraschallfeld aufspannen. Die von der Wandlereinheit empfangenen Signale können im Empfangsteil der Wandlersteuereinheit verstärkt und einem Mehrstufen-Komparator zugeführt werden, welcher zur Digitalisierung der Amplituden der von der Wandlereinheit empfangenen Ultraschallwellen dient. Der Mehrstufen-Komparator kann auf einfache Weise eingangsseitig an eine Rechnereinheit der Auswerteeinheit angeschlossen werden, welche ausgangsseitig den Impulsoszillator aufweist. Über eine Signalleitung kann die Rechnereinheit ein einem Eingriff in den Überwachungsbereich entsprechendes Signal an ein Steuergerät eines Verdeckmechanismus oder einer Alarmanlage des Fahrzeuges ausgeben.

Ein Eingriff in den Überwachungsbereich wird bei einer vorteilhaften Ausführung der erfindungsgemäßen Detektionsvorrichtung dadurch erkannt, dass sich der auf ein in den Überwachungsbereich eingreifendes Objekt zurückzuführende Echohüllkurvenbeitrag zeitlich rascher ändert als der auf stationäre Fahrzeugbauteile bezogene Echohüllkurvenbeitrag. Wenn für jeden Überwachungszyklus die Fläche der erhaltenen, vom Mehrstufen-Komparator digitalisierten Echohüllkurve mit einem Ansprechwert verglichen wird, der um einen Toleranzwert über dem zur stationären Echohüllkurve gehörigen Flächenwert liegt, kann ein Eingriff erkannt werden, da der vorgegebene Ansprechwert überschritten wird. Durch die zusätzliche zur Fläche der stationären Echohüllkurve hinzukommende Fläche des zeitlich zuvor liegenden dynamischen, objekteingriffsbedingten Hüllkurvenbeitrags erhöht sich stets die gesamte, aufintegrierte Hüllkurvenfläche signifikant, so dass dieser Wert deutlich von dem Vergleichswert unterschieden und somit ein Eingriff erkannt werden kann.

Es versteht sich, dass die Detektionsvorrichtung gemäß der Erfindung je nach Anwendungsfall mehrere Sende-/Empfangseinheiten mit speziell auf den zu überwachenden Bereich ausgerichteten Überwachungsebenen aufweisen kann, wobei die Auswertung der Echohüllkurve auf unterschiedliche Weise erfolgen kann.

Weitere Vorteile und vorteilhafte Ausgestaltungen einer Detektionsvorrichtung gemäß der Erfindung sind der Beschreibung, der Zeichnung und den Patentansprüchen entnehmbar.

Ein Ausführungsbeispiel einer Detektionsvorrichtung gemäß der Erfindung an einem Cabriolet-Kraftfahrzeug ist in der Zeichnung schematisch vereinfacht dargestellt und wird in der nachfolgenden Beschreibung näher erläutert.

Es zeigt:
- Fig. 1: eine stark schematisierte Draufsicht auf ein Cabriolet-Kraftfahrzeug mit einem sich in geöffnetem Zustand befindlichen fahrbaren Verdeck, wobei von einer Detektionsvorrichtung zur Überwachung von Grenzflächen eines Raumes des Kraftfahrzeuges gebildete Ultraschallfelder dargestellt sind; und
- Fig. 2: eine stark schematisierte Seitenansicht des Cabriolet-Kraftfahrzeuges der Fig. 1.

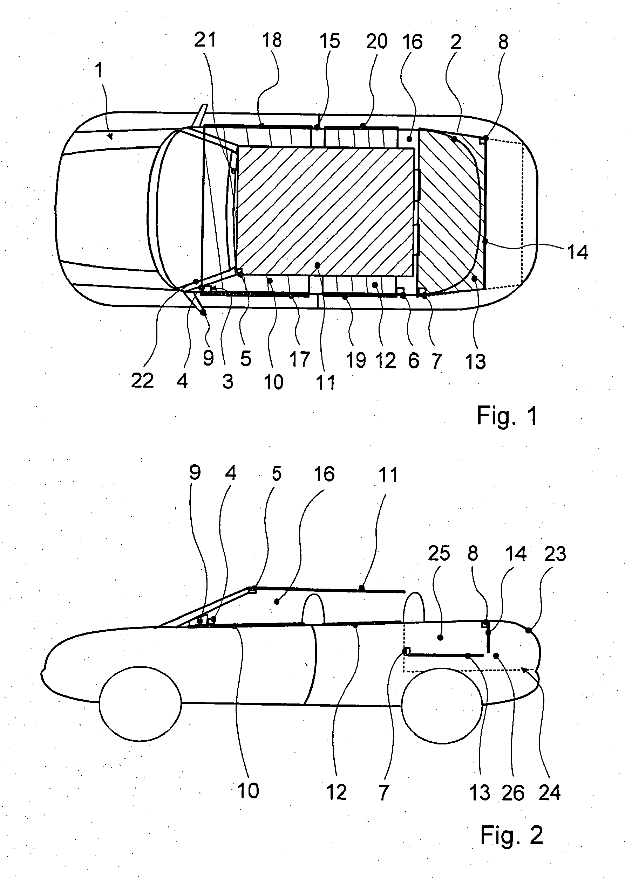

Die Fig. l und Fig. 2 zeigen ein Cabriolet-Kraftfahrzeug 1 mit einem fahrbaren Verdeck 2, welches hier in einem geöffneten, in einem Verdeckablageraum 25 abgelegten Zustand gezeigt ist und nur hinsichtlich seiner Lage mit dem Bezugszeichen 2 angedeutet ist.

Das Verdeck 2 umfasst in üblicher Weise einen Verdeckmechanismus, der durch ein Verdecksteuergerät und einen elektrohydraulischen Verdeckantrieb zwischen einer geöffneten und einer geschlossenen Stellung bewegbar ist.

Zur Überwachung von Grenzflächen mehrerer Räume des Cabriolet-Kraftfahrzeuges 1 ist eine Detektionsvorrichtung 3 vorgesehen, welche als akustische, mit Ultraschallwellen arbeitende Sensorik ausgebildet ist.

Die Detektionsvorrichtung 3 weist mehrere, hier als Ultraschallwandler ausgebildete Sende-/Empfangseinheiten 5, 6, 7, 8 für Ultraschallwellen und eine hiermit verbundene, nicht näher dargestellte Auswerteeinheit auf.

Die Sende-/Empfangseinheiten 5, 6, 7, 8 bilden jeweils an einer zu überwachenden Grenzfläche eines Raumes ein wenigstens annähernd parallel zu der Grenzfläche verlaufendes, im Wesentlichen ebenenartiges Ultraschallfeld 10, 11, 12, 13, 14 aus, wobei die Auswerteeinheit eine ermittelte Echohüllkurve dieser Ultraschallfelder mit einer jeweils in einer Speichereinheit der Auswerteeinheit abgelegten Vergleichskurve für einen Zustand ohne Eingriff vergleicht und bei einer vordefinierten Abweichung einen Eingriff in den Detektionsbereich erkennt.

Eine erste Sende-/Empfangseinheit 4 ist an einem seitlichen Spiegeldreieck an der Fahrzeuginnenseite wenigstens annähernd in Höhe einer Türbrüstung 15 und im Bereich eines seitlichen Rückspiegels 9 angeordnet, deren Ultraschallfeld 10 sich im Wesentlichen horizontal bzw. parallel zu einem Fahrzeugboden entlang einer mit der Türbrüstung in Fahrzeughöhenrichtung abschließenden Grenzfläche eines Insassen-/Verdeckbewegungsraumes 16 im Bereich von Fahrzeugvordersitzen erstreckt.

Alternativ kann es ggf. auch vorgesehen sein, dass die Sende-/Empfangseinheit an dem seitlichen Rückspiegel angeordnet ist.

Eine weitere Sende-/Empfangseinheit 6 ist an der Türbrüstung 15 zum Aufspannen eines weiteren, sich über den Fondbereich und parallel zu dem Fahrzeugboden erstreckenden Ultraschallfeldes 12 angeordnet.
Diese Ultraschallfelder 10, 11 dienen vorrangig einem Alarmsystem des Fahrzeuges, indem ihre Störung einen unerlaubten Eingriff in das Fahrzeuginnere indiziert.

Alternativ oder ergänzend kann es auch vorgesehen sein, dass beispielsweise durch die gezeigten und weitere oder andere Sende-/Empfangseinheit entlang der Linien 17, 18, 19, 20 in Fig. 1 vertikale Ultraschallfelder gebildet werden, welche gleichzeitig der Überwachung des Bewegungsraumes des Verdecks 2 und der Innenraumsicherung dienen können.

Die Detektionsvorrichtung 3 weist des Weiteren vorliegend eine Sende-/Empfangseinheit 5 an einer A-Säule 22 in Höhe einer oberen Traverse eines Windschutzscheibenrahmens 22 auf, welche ein Ultraschallfeld 11 bildet, das sich im Wesentlichen parallel zu dem Fahrzeugboden entlang der oberen Grenzfläche des Insassen-/Verdeckbewegungsraumes 16 erstreckt. Auch dieses Ultraschallfeld 11 kann sowohl der Überwachung des Bewegungsraumes des Verdecks 2, hier in Kopfhöhe von Insassen, als auch der Innenraumsicherung dienen.

Weiterhin ist in der Zeichnung ersichtlich, dass im Heckbereich des Cabriolet-Kraftfahrzeuges 1 ein von einer Heckklappe 23 abgedeckter Aufnahmeraum 22 angeordnet ist, welcher in abgelegtem Zustand des Verdecks 2 teilweise als Verdeckablageraum 25 und teilweise als Kofferraum 26 nutzbar ist.

Zur Überwachung der Grenzfläche zwischen diesen durch keine weiteren mechanischen Einrichtungen unterteilten Räume 25 und 26 dienen die Sende-/Empfangseinheiten 7 und 8, welche Ultraschallfelder 13, 14 entlang der Grenzfläche zwischen dem Verdeckablageraum 25 und dem Kofferraum 26 bilden.

Die erste dieser Sende-/Empfangseinheiten 7 ist an einer Begrenzungswand des Aufnahmeraumes 24 derart angeordnet, dass sich das zugehörige Ultraschallfeld 13 wenigstens annähernd horizontal erstreckt und den Aufnahmeraum 24 teilweise vertikal in den Verdeckablageraum 25 und den darunter liegenden Teil des Kofferraums 26 unterteilt.

Da sich der Verdeckablageraum 25 vorliegend in Fahrzeuglängsrichtung nur über einen an eine Fondrückbank angrenzenden Teil des Aufnahmeraumes 24 erstreckt, wird mit der weiteren, ebenfalls an einer seitlichen Begrenzungswand des Aufnahmeraumes 24 angeordneten Sende-/Empfangseinheit 8 eine vertikale Grenzfläche zu dem heckseits liegenden Teil des Kofferraums 26 mittels des Ultraschallfeldes 14 überwacht.

Neben den hier exemplarisch gezeigten Anordnungen von Sende-/Empfangseinheiten können diese zur Aufspannung weiterer ebenenartiger Utraschallfelder selbstverständlich an jedem hierzu geeigneten Fahrzeugelement angeordnet sein, so z. B. auch direkt an dem Verdeck des Cabriolet-Kraftfahrzeuges zur Überwachung der Grenzflächen des Insassen-/Verdeckbewegungsraumes.

### BEZUGSZEICHENLISTE

- 1: Cabriolet-Kraftfahrzeug
- 2: Verdeck
- 3: Detektionsvorrichtung
- 4: Sende-/Empfangseinheit
- 5: Sende-/Empfangseinheit
- 6: Sende-/Empfangseinheit
- 7: Sende-/Empfangseinheit
- 8: Sende-/Empfangseinheit
- 9: seitlicher Rückspiegel
- 10: Ultraschallfeld
- 11: Ultraschallfeld
- 12: Ultraschallfeld
- 13: Ultraschallfeld
- 14: Ultraschallfeld
- 15: Türbrüstung
- 16: Insassen-/Verdeckbewegungsraum
- 17: mögliches vertikales Ultraschallfeld
- 18: mögliches vertikales Ultraschallfeld
- 19: mögliches vertikales Ultraschallfeld
- 20: mögliches vertikales Ultraschallfeld
- 21: Windschutzscheibenrahmen
- 22: A-Säule
- 23: Heckklappe
- 24: Aufnahmeraum
- 25: Verdeckablageraum
- 26: Kofferraum

## Patentansprüche

1. Detektionsvorrichtung zur Überwachung von Grenzflächen eines Raumes eines Kraftfahrzeuges, insbesondere eines Bewegungsraumes eines Verdecks (2) eines Cabriolet-Kraftfahrzeuges (1), mittels Ultraschallwellen, mit wenigstens einer Sende-/Empfangseinheit (4, 5, 6, 7, 8) für Ultraschallwellen und einer hiermit verbundenen Auswerteeinheit,
**dadurch gekennzeichnet,**
**dass** der Detektionsbereich der Sende-/Empfangseinheit (4, 5, 6, 7, 8) ein wenigstens annähernd parallel zu einer Grenzfläche verlaufendes, im Wesentlichen ebenenartiges Ultraschallfeld (10, 11, 12, 13, 14) ist, wobei die Auswerteeinheit eine ermittelte Echohüllkurve mit einer Vergleichskurve vergleicht und bei einer vordefinierten Abweichung einen Eingriff in den Detektionsbereich erkennt.

2. Detektionsvorrichtung nach Anspruch 1,
**dadurch gekennzeichnet,**
**dass** die wenigstens eine Sende-/Empfangseinheit (7, 8) in einem von einer Heckklappe (23) abgedeckten Aufnahmeraum (24), welcher in abgelegtem Zustand des Verdecks (2) teilweise einen Verdeckablageraum (25) und teilweise einen Kofferraum (26) bildet, derart angeordnet ist, dass sich das wenigstens eine Ultraschallfeld (13, 14) entlang der Grenzfläche zwischen diesen Räumen (25, 26) erstreckt.

3. Detektionsvorrichtung nach Anspruch 2,
**dadurch gekennzeichnet,**
**dass** die wenigstens eine Sende-/Empfangseinheit (7) an einer Begrenzungswand des Aufnahmeraumes (24) angeordnet ist, wobei sich das zugehörige Ultraschallfeld (13) wenigstens annähernd horizontal erstreckt und den Aufnahmeraum (24) bezüglich seiner Vertikalerstreckung wenigstens teilweise vertikal in den Verdeckablageraum (25) und den darunter angeordneten Kofferraum (26) unterteilt.

4. Detektionsvorrichtung nach Anspruch 2 oder 3,
**dadurch gekennzeichnet,**
**dass** sich die Unterteilung zwischen Verdeckablageraum (25) und Kofferraum (26) und die mittels des wenigstens einen Ultraschallfeldes (13, 14) zu überwachende Grenzfläche in Fahrzeuglängsrichtung nur über einen Teil des Aufnahmeraumes (24) erstreckt.

5. Detektionsvorrichtung nach einem der Ansprüche 1 bis 4,
**dadurch gekennzeichnet,**
**dass** die wenigstens eine Sende-/Empfangseinheit (4, 6) an einer Fahrzeugseite wenigstens annähernd in Höhe einer Türbrüstung (15) derart angeordnet ist, dass sich das wenigstens eine Ultraschallfeld (10, 12) im Wesentlichen vertikal und/oder parallel zu einem Fahrzeugboden entlang der Grenzfläche eines Insassen-/Verdeckbewegungsraumes (16) erstreckt.

6. Detektionsvorrichtung nach Anspruch 5,
**dadurch gekennzeichnet,**
**dass** die wenigstens eine Sende-/Empfangseinheit (4) im Fahrzeuginneren in einem Bereich, welcher an einen seitlichen Rückspiegel (9) grenzt, angeordnet ist.

7. Detektionsvorrichtung nach Anspruch 5,
**dadurch gekennzeichnet,**
**dass** die wenigstens eine Sende-/Empfangseinheit (6) an der Türbrüstung (15) angeordnet ist.

8. Detektionsvorrichtung nach einem der Ansprüche 1 bis 7,
**dadurch gekennzeichnet,**
**dass** die wenigstens eine Sende-/Empfangseinheit (5) wenigstens annähernd in Höhe einer oberen Traverse eines Windschutzscheibenrahmens (21) derart angeordnet ist, dass sich das Ultraschallfeld (11) im Wesentlichen parallel zu einem Fahrzeugboden entlang der oberen Grenzfläche eines Insassen-/Verdeckbewegungsraumes (16) erstreckt.

9. Detektionsvorrichtung nach einem der Ansprüche 1 bis 8,
**dadurch gekennzeichnet,**
**dass** die wenigstens eine Sende-/Empfangseinheit an dem Verdeck eines Cabriolet-Kraftfahrzeuges derart angeordnet ist, dass sich das Ultraschallfeld im Wesentlichen entlang der Grenzfläche eines Insassen-/Verdeckbewegungsraumes erstreckt.
